# DEMANDE DE BREVET EUROPEEN

(11) **EP 4 557 185 A1**
(43) Date de publication de la demande: **21.05.2025**
(21) Numéro de dépôt: 24212782.7
(22) Date de dépôt: 13.11.2024
(51) Int. Cl.: G06N 20/00

(54) **PROCÉDÉ ET DISPOSITIF D' ANALYSE AUTOMATIQUE DE DÉSAPPRENTISSAGE D' AU MOINS UNE CLASSE PAR UN MODÈLE DE CLASSIFICATION DE DONNÉES**

(30) Priorité: 15.11.2023 FR 2312497
(71) Demandeur: THALES, 92190 Meudon (FR)
(72) Inventeur: HÉLIOU, Alice, 91767 PALAISEAU (FR); THOUVENOT, Vincent, 91767 PALAISEAU (FR); MORISSE, Baptiste, 91767 PALAISEAU (FR); LAMPE, Rodolphe, 91767 PALAISEAU (FR); HUYNH, Cong Bang, 91767 PALAISEAU (FR)
(74) Mandataire: Lavoix

(57) **Abrégé**

La présente invention concerne un procédé et un dispositif d'analyse automatique de désapprentissage d'au moins une classe par un modèle cible (MC) de classification de données, parmi un ensemble de classes candidates (20). Le dispositif met en oeuvre une pluralité de modèles témoins (MT₁, ..., MT_{N}) appris par apprentissage machine, et des modules de : première détermination (32), en fonction de valeurs d'homogénéité calculées dans l'espace latent (12, 12₁...12_{N}) pour le modèle cible et pour chaque modèle témoin, fournissant en sortie une première prédiction binaire et un premier score de prédiction associé, et/ou deuxième détermination (34), en fonction d'une caractéristique de ré-apprentissage de raffinement de classes supplémentaires parmi lesdites classes candidates par le modèle cible et les modèles témoins, fournissant en sortie un deuxième une deuxième prédiction binaire et score de prédiction associé, et de calcul (36) d'un score final en fonction des premier et deuxième scores de prédiction.

## Description

La présente invention concerne un procédé d'analyse automatique de désapprentissage d'au moins une classe par un modèle de classification de données.

L'invention concerne également un dispositif associé et un programme d'ordinateur associés.

L'invention concerne également un procédé et dispositif de génération d'un modèle de classification de données par apprentissage machine ne permettant pas de révéler des classes désapprises.

L'invention se situe dans le domaine de la sécurité pour des applications utilisant l'intelligence artificielle.

De nombreux systèmes appliqués, par exemple dans le domaine industriel, médical ou militaire, utilisent des modèles de classification automatique des données, par exemple des modèles basés sur des réseaux de neurones artificiels, qui sont entraînés par apprentissage machine.

Ce type de modèle de classification comporte un très large nombre de paramètres, dont les valeurs sont calculées et mises à jour de manière dynamique. Il est nécessaire d'apprendre les valeurs des paramètres définissant un modèle de classification, l'apprentissage (également appelée entraînement) des paramètres s'effectuant dans une phase d'apprentissage sur des quantités de données très importantes. De manière classique, de tels modèles de classification prennent en entrée des données d'entrée, par exemple sous forme vectorielle ou matricielle, de type connu, et fournissent en sortie une classification en une pluralité de classes de sortie, par exemple représentées sous forme d'un vecteur dont les composantes sont des valeurs de sortie, également appelées « logits », chaque composante du vecteur correspondant à une classe. Plus la valeur de sortie est élevée, plus la classe correspondante est prédite par le modèle de classification.

Par exemple, les données d'entrée sont des images, de dimensions prédéterminées, et les labels de classification représentent des classes prédéterminées, par exemple représentatives de types d'objet présent dans la scène représentée par l'image, selon l'application envisagée.

Les données d'entrée utilisées pour l'apprentissage, appelées données d'apprentissage, sont issues soit de bases de données publiques, soit de bases de données privées. Pour réaliser un apprentissage, il est nécessaire de fournir des données d'exemple, également appelées instances, de chacune des classes de sortie.

Dans certaines applications, nécessitant un certain niveau de sécurité, il peut être constaté a posteriori que certaines classes dont la classification est initialement apprise par un modèle de classification, dit modèle initial, sont des classes dites sensibles. Il est alors prévu d'effectuer une opération dite de désapprentissage (en anglais « unlearning »), qui permet, en partant d'un modèle initial, de « désapprendre » certaines classes, qui seront appelées ci-après classes oubliées, parmi les classes initiales, tout en continuant à apprendre de nouvelles classes. Ainsi, le désapprentissage permet d'obtenir un modèle de classification en un nouvel ensemble de classes de sortie, tout en tirant partie de l'apprentissage du modèle initial de classification. Cette méthode est plus efficace, et donc moins coûteuse en termes d'utilisation de ressources, qu'un ré-apprentissage complet d'un modèle de classification.

Des méthodes de désapprentissage (« machine unlearning ») de données d'apprentissage, classes ou variables d'un modèle de classification par apprentissage machine ont été mises au point récemment.

Il est nécessaire, pour un propriétaire légitime d'un modèle de classification par apprentissage machine, obtenu par application d'une méthode de désapprentissage sur un modèle de classification initial, d'être en mesure de vérifier que le désapprentissage est effectif. De même, pour le propriétaire légitime de données d'une ou plusieurs classes sensibles, il est critique de s'assurer que les instances de classes sensibles n'ont pas été utilisées pour l'apprentissage machine d'un modèle de classification fourni par un tiers.

Le but de l'invention est alors de proposer un procédé d'analyse automatique de désapprentissage d'au moins une classe par un modèle de classification de données, permettant de vérifier le désapprentissage d'une ou plusieurs classes candidates.

A cet effet, l'invention a pour objet un procédé d'analyse automatique de désapprentissage d'au moins une classe par un modèle de classification de données, dit modèle cible, le modèle cible ayant été préalablement entraîné par apprentissage machine pour une classification de données en P classes de sortie, le procédé recevant en entrée le modèle cible sous forme d'un module cible d'extraction de caractéristiques représentées dans un espace latent, et d'un module cible de classification des caractéristiques en P classes de sortie, et une base de données comportant des instances de chacune des P classes de sortie et des instances de Q classes candidates distinctes des P classes de sortie, le modèle cible ayant été obtenu à partir d'un modèle initial de classification des données en des classes initiales, par désapprentissage d'au moins une classe dite classe oubliée, parmi desdites classes initiales, le modèle initial de classification étant non fourni.

Le procédé est mis en oeuvre par un processeur de calcul et comporte pour déterminer si au moins une desdites classes candidates est une desdites classes oubliée, des étapes de :
- calcul par apprentissage machine d'une pluralité de modèles témoins, chaque modèle témoin comportant un module témoin d'extraction de caractéristiques représentées dans un espace latent, et un module témoin de classification pour classifier des données d'entrées en un nombre de classes témoins choisi, à partir d'instances d'au moins un premier sous-ensemble des classes de sortie et/ou d'au moins un deuxième sous-ensemble des classes candidates,
pour la ou chaque classe candidate :
- première détermination, en fonction de valeurs d'homogénéité calculées dans l'espace latent pour le modèle cible et pour chaque modèle témoin, fournissant en sortie une première prédiction binaire et un premier score de prédiction associé, et
- deuxième détermination, en fonction d'une caractéristique de ré-apprentissage de raffinement de classes supplémentaires parmi lesdites classes candidates par le modèle cible et les modèles témoins, fournissant en sortie une deuxième prédiction binaire et un deuxième score de prédiction associé ;
- calcul d'un score final en fonction du premier score de prédiction et du deuxième score de prédiction, le score final permettant de déterminer une probabilité que la classe candidate soit une classe oubliée.

Avantageusement, le procédé proposé permet de déterminer si une ou plusieurs des classes candidates font partie des classes oubliées, en l'absence de toute connaissance du modèle de classification initial.

Le procédé d'analyse automatique de désapprentissage selon l'invention peut également présenter une ou plusieurs des caractéristiques ci-dessous, prises indépendamment ou selon toutes les combinaisons techniquement envisageables.

La première détermination comporte, pour chaque classe candidate, pour une pluralité d'instances des classes candidates :
- mise en oeuvre du module cible d'extraction des caractéristiques du modèle cible pour obtenir un vecteur de caractéristiques dans l'espace latent pour chaque instance de chaque classe candidate,
- pour chaque classe candidate, calcul d'une première valeur d'homogénéité en fonction des vecteurs de caractéristiques calculés.

La première détermination comporte en outre, pour chaque classe candidate et chaque modèle témoin, une mise en oeuvre du module témoin d'extraction des caractéristiques dudit modèle témoin pour obtenir un vecteur de caractéristiques dans l'espace latent associé, et un calcul d'une deuxième valeur d'homogénéité par classe candidate et par modèle témoin.

Le procédé comporte en outre un apprentissage d'un algorithme de normalité sur les deuxièmes valeurs d'homogénéité calculées pour les classes candidates pour tous les modèles témoins.

Il comporte également une mise en oeuvre de l'algorithme de normalité sur les première valeurs d'homogénéité calculées avec le modèle cible par classe candidate pour obtenir la première prédiction binaire et le premier score de prédiction classe candidate.

La deuxième détermination met en oeuvre, pour ledit modèle cible et chacun des modèles témoins, un ré-apprentissage de raffinement d'au moins une classe candidate.

Le procédé comporte une évaluation par classe candidate, d'une première vitesse de ré-apprentissage de raffinement par le modèle cible, et de deuxièmes vitesses de ré-apprentissage de raffinement par les modèles témoins.

Selon un autre aspect, l'invention concerne un dispositif d'analyse automatique de désapprentissage d'au moins une classe par un modèle de classification de données, dit modèle cible, le modèle cible ayant été préalablement entraîné par apprentissage machine pour une classification de données en P classes de sortie, le dispositif recevant en entrée le modèle cible sous forme d'un module cible d'extraction de caractéristiques représentées dans un espace latent, et d'un module cible de classification des caractéristiques en P classes de sortie, et une base de données comportant des instances de chacune des P classes de sortie et des instances de Q classes candidates distinctes des P classes de sortie, le modèle cible ayant été obtenu à partir d'un modèle initial de classification des données en des classes initiales, par désapprentissage d'au moins une classe dite classe oubliée, parmi desdites classes initiales, le modèle initial de classification étant non fourni.

Le dispositif comportant processeur de calcul configuré pour mettre en oeuvre, pour déterminer si au moins une desdites classes candidates est une desdites classes oubliée :
- un module de calcul par apprentissage machine d'une pluralité de modèles témoins, chaque modèle témoin comportant un module témoin d'extraction de caractéristiques représentées dans un espace latent, et un module témoin de classification pour classifier des données d'entrées en un nombre de classes témoins choisi, à partir d'instances d'au moins un premier sous-ensemble des classes de sortie et/ou d'au moins un deuxième sous-ensemble des classes candidates,
pour la ou chaque classe candidate :
- un module de première détermination, en fonction de valeurs d'homogénéité calculées dans l'espace latent pour le modèle cible et pour chaque modèle témoin, fournissant en sortie une première prédiction binaire et un premier score de prédiction associé, et

- un module de deuxième détermination, en fonction d'une caractéristique de ré-apprentissage de raffinement de classes supplémentaires parmi lesdites classes candidates par le modèle cible et les modèles témoins, fournissant en sortie une deuxième prédiction binaire et un deuxième score de prédiction associé ;
- un module de calcul d'un score final en fonction du premier score de prédiction et du deuxième score de prédiction, le score final permettant de déterminer une probabilité que la classe candidate soit une classe oubliée.

Le dispositif est avantageusement configuré pour mettre en oeuvre un procédé d'analyse automatique de désapprentissage tel que brièvement décrit ci-dessus.

Selon un autre aspect, l'invention concerne un support d'enregistrement d'informations, sur lequel sont mémorisées des instructions logicielles pour l'exécution d'un procédé d'analyse automatique de désapprentissage tel que brièvement décrit ci-dessus, lorsque ces instructions sont exécutées par un dispositif électronique programmable.

Selon un autre aspect, l'invention concerne un programme d'ordinateur comportant des instructions logicielles qui, lorsqu'elles sont mises en oeuvre par un dispositif électronique programmable, mettent en oeuvre un procédé d'analyse automatique de désapprentissage tel que brièvement décrit ci-dessus.

Selon un autre aspect, l'invention concerne un procédé de génération d'un modèle de classification de données par apprentissage machine sécurisé vis-à-vis du désapprentissage d'une ou plusieurs classes initialement apprises pour la classification, comportant les étapes suivantes mises en oeuvre par un processeur de calcul :
a)- génération d'un modèle de classification de données MC par apprentissage machine sécurisé,
b) -désapprentissage d'au moins une classe choisie,
c1)- mise en oeuvre du procédé d'analyse automatique de désapprentissage d'au moins une classe tel que décrit ci-dessus, relativement audit modèle de classification de données MC pour ladite au moins une classe choisie comme classe candidate, et obtention, pour chaque classe candidate, d'un score final permettant de déterminer une probabilité associée que la classe candidate soit une classe oubliée ;
c2)- vérification d'une condition de sécurité fonction du score final et/ou de la probabilité associée,
c3)-si la vérification indique une sécurité insuffisante, modification du modèle de classification MC.

Selon une variante, l'étape de désapprentissage b) met en oeuvre une première méthode de désapprentissage, et ladite modification c3) du modèle de classification MC met en oeuvre une deuxième méthode de désapprentissage de la ou de chaque classe choisie, la deuxième méthode de désapprentissage étant distincte de la première méthode de désapprentissage.

Selon une variante, les étapes c1) à c3) sont itérées jusqu'à ce que la vérification indique une sécurité suffisante.

Selon un aspect, l'invention concerne un dispositif de génération d'un modèle de classification de données par apprentissage machine sécurisé vis-à-vis du désapprentissage d'une ou plusieurs classes initialement apprises pour la classification, comportant un processeur de calcul configuré pour exécuter un procédé de génération d'un modèle de classification de données par apprentissage machine sécurisé vis-à-vis du désapprentissage d'une ou plusieurs classes initialement apprises pour la classification tel que brièvement décrit ci-dessus.

L'invention apparaîtra plus clairement à la lecture de la description qui va suivre, donnée uniquement à titre d'exemple non limitatif, et faite en référence aux dessins dans lesquels :
- la figure 1 est une représentation schématique des principaux modules d'un dispositif d'analyse automatique désapprentissage selon un mode de réalisation;
- la figure 2 est un synoptique des principales étapes d'un procédé d'analyse automatique de désapprentissage selon un mode de réalisation;
- la figure 3 est un synoptique des principales étapes d'une première détermination du désapprentissage d'une ou plusieurs des classes candidates ;
- la figure 4 est un synoptique des principales étapes d'une deuxième détermination du désapprentissage d'une ou plusieurs des classes candidates ;
- la figure 5 est un synoptique des principales étapes d'un mode de réalisation d'un procédé de de génération d'un modèle de classification par apprentissage machine sécurisé.

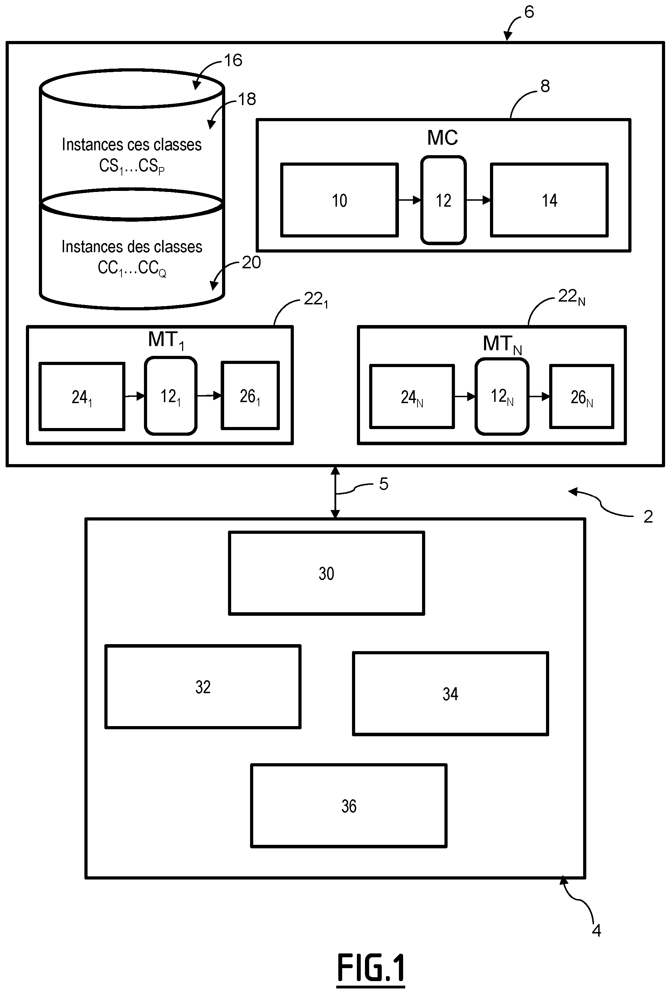

La figure 1 représente schématiquement les principaux modules d'un dispositif 2 d'analyse automatique de désapprentissage d'au moins une classe candidate par un modèle de classification cible.

Le dispositif 2 est un dispositif électronique programmable, e.g un ordinateur. En variante non représentée, le dispositif 2 est formé d'une pluralité de dispositifs électroniques programmables connectés entre eux.

Le dispositif 2 comporte au moins un processeur de calcul 4, au moins une unité de mémoire électronique 6, adaptées à communiquer via un bus de communication 5. Par souci de simplification, un seul processeur de calcul 4 et une seule unité de mémoire électronique 6 sont représentés.

En complément, le dispositif 2 comporte également une interface de communication avec des dispositifs distants, par un protocole de communication choisi, par exemple un protocole filaire et/ou un protocole de communication radio, ainsi qu'une interface homme machine ; ces interfaces sont réalisées de manière classique et ne sont pas représentées dans la figure 1.

Le modèle cible MC, référencé 8 sur la figure 1, est fourni en entrée du dispositif, et mémorisé dans l'unité de mémoire électronique 6.

Le modèle cible MC est un modèle de classification de données d'entrée préalablement entraîné par apprentissage machine sur un ensemble de données d'apprentissage, l'ensemble de données d'apprentissage utilisé n'étant pas fourni.

Le modèle cible a été préalablement entraîné pour classifier des données d'entrée en P classes de sortie CS₁...CS_{P}, P étant un entier positif.

Le modèle cible MC est fourni sous forme d'un module cible d'extraction de caractéristiques 10, les caractéristiques étant représentées un espace latent 12, et d'un module cible de classification 14, configuré pour une classification des caractéristiques, représentées dans l'espace latent 12, en P classes de sortie.

Chacun des modules 10; 14 est par exemple fourni sous forme de code exécutable.

Ainsi, il est possible, en exécutant le modèle cible MC sur une donnée d'entrée Ei, présentée sous forme vectorielle ou matricielle, d'obtenir par exécution du module cible d'extraction de caractéristiques 10, des caractéristiques sous forme de vecteur de caractéristiques de dimension T (ou nombre de composantes) prédéterminée, par exemple T=1024 ou T=2048 ou plus, associées à la donnée d'entrée dans l'espace latent 12.

La dimension T de l'espace latent est dépendante du modèle cible appliqué.

Dans un mode de réalisation, le modèle cible est un réseau de neurones multicouches.

De manière connue, un réseau de neurones comporte une succession ordonnée de couches de neurones dont chacune prend ses entrées sur les sorties de la couche précédente.

Plus précisément, chaque couche comprend des neurones prenant leurs entrées sur les sorties des neurones de la couche précédente, ou bien sur les variables d'entrée pour la première couche.

En variante, des structures de réseaux de neurones plus complexes peuvent être envisagées avec une couche qui peut être reliée à une couche plus lointaine que la couche immédiatement précédente.

À chaque neurone est également associée une opération, c'est-à-dire un type de traitement, à effectuer par ledit neurone au sein de la couche de traitement correspondante.

Chaque couche est reliée aux autres couches par une pluralité de synapses. Un poids synaptique est associé à chaque synapse, et chaque synapse forme une liaison entre deux neurones. C'est souvent un nombre réel, qui prend des valeurs positives comme négatives. Dans certains cas, le poids synaptique est un nombre complexe.

Chaque neurone est propre à effectuer une somme pondérée des valeur(s) reçue(s) de la part des neurones de la couche précédente, chaque valeur étant alors multipliée par le poids synaptique respectif de chaque synapse, ou liaison, entre ledit neurone et les neurones de la couche précédente, puis à appliquer une fonction d'activation, typiquement une fonction non-linéaire, à ladite somme pondérée, et à délivrer en sortie dudit neurone, en particulier aux neurones de la couche suivante qui lui sont connectés, la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside sont des exemples de fonction d'activation.

En complément facultatif, chaque neurone est également apte à appliquer, en outre, un facteur multiplicatif, et un biais additif, à la sortie de la fonction d'activation, et la valeur délivrée en sortie dudit neurone est alors le produit de la valeur facteur multiplicatif et de la valeur issue de la fonction d'activation, additionnée du biais.

Un réseau de neurones à convolution est aussi parfois dénommé réseau de neurones convolutif ou par le sigle CNN qui renvoie à la dénomination anglaise de « *Convolutional Neural Networks ».*

Dans un réseau de neurones à convolution, chaque neurone d'une même couche présente exactement le même schéma de connexion que ses neurones voisins, mais à différentes positions d'entrée. Le motif de connexion est appelé noyau de convolution ou, plus souvent, « *kernel* » en référence à la dénomination anglaise correspondante.

Une couche de neurones entièrement connectée est une couche dans laquelle les neurones de ladite couche sont chacun connectés à tous les neurones de la couche précédente.

Un tel type de couche est plus souvent dénommé selon le terme anglais de « *fully connected* », et parfois désigné sous la dénomination « couche dense ».

Les valeurs des poids, facteurs multiplicateurs et biais le cas échéant sont apprises lors d'une phase d'apprentissage machine pour réaliser la tâche de classification.

L'invention s'applique avec tous les types de réseau de neurones.

Dans un mode de réalisation, le modèle cible MC est un réseau de neurones multicouches, et le module cible d'extraction de caractéristiques 10 comporte les couches du réseau de neurones jusqu'à l'avant dernière couche du réseau de neurones multicouches, et le module cible de classification 14, également appelé «tête de classification » comporte la dernière couche.

La structure et les paramètres formant le modèle cible MC, et en particulier la structure et les paramètres du module cible d'extraction des caractéristiques, sont fournis également en entrée du dispositif et du procédé d'analyse de désapprentissage.

Outre le modèle cible, le dispositif 2 reçoit en entrée une base de données 16 comportant des données du type des données d'entrée du modèle cible. La base de données 16 comporte des données d'exemple de classes, également appelées instances, qui sont d'une part, des instances 18 de chacune des P classes de sortie, notées CS₁ ... CS_{P}, et des instances 20 de Q classes candidates, notées CC₁...CC_{Q}.

Les instances 18 de la base de données 16 sont a priori différentes des instances de la base de données d'apprentissage utilisée lors de l'apprentissage du modèle cible, la base de données d'apprentissage étant a priori non fournie.

Les nombres P et Q sont des entiers positifs.

Le nombre Q de classes candidates est supérieur ou égal à 1.

Le classes candidates sont toutes distinctes des P classes de sortie.

Les classes candidates sont les classes sur lesquelles porte le procédé d'analyse automatique de désapprentissage.

Il est considéré que le modèle cible est susceptible d'avoir été obtenu par désapprentissage d'au moins un classe, dite classe oubliée, d'un modèle initial de classification de données de même type que les données d'entrée du modèle cible. Le modèle initial de classification ayant lui-même été entraîné par apprentissage machine pour classifier les données en des classes initiales, les classes initiales étant au moins en partie distinctes des P classes de sortie du modèle cible.

Le procédé d'analyse automatique de désapprentissage décrit ne prend en entrée ni le modèle initial de classification, ni les classes initiales.

En d'autres termes, le procédé s'exécute en l'absence de connaissance sur le modèle initial de classification, et également en l'absence de connaissance de la méthode de désapprentissage et, le cas échéant, réapprentissage, mise en oeuvre.

Le processeur 4 est configuré pour mettre en oeuvre un module 30 de génération par apprentissage machine de modèles témoins MT₁... MT_{N}, référencés par des références 22₁...22_{N} sur la figure, le nombre N étant une variable du procédé mis en oeuvre.

Chaque modèle témoin MTᵢ est un modèle de classification composé d'un module témoin d'extraction de caractéristiques 24ᵢ représentées sous forme d'un vecteur de caractéristiques dans un espace latent 12i, de même dimension que l'espace latent 12. et d'un module témoin de classification 26ᵢ, configuré pour une classification des caractéristiques, représentées dans l'espace latent 12, en un nombre choisi R de classes témoins.

Les classes témoins sont choisies parmi les classes de sortie CS₁...CS_{P} et les classes candidates CS₁...CS_{Q}.

Par exemple, le nombre R de classes témoins est compris entre P et P+Q.

Les paramètres de chaque modèle témoin 22ⱼ sont appris par apprentissage machine sur une partition distincte des données de la base de données 16.

De préférence, chaque modèle témoin 22ⱼ est appris à partir d'une partition comportant des instances d'au moins un premier sous-ensemble des classes de sortie CS₁...CS_{P} et d'au moins un deuxième sous-ensemble des classes candidates CS₁...CS_{Q}. En d'autres termes, les R classes témoins comprennent des classes de sortie et/ou des classes candidates.

De préférence, au moins un des modèles témoins est entraîné pour apprendre les P classes de sortie.

L'apprentissage du ou des modèle(s) témoin(s) pour lesquels les classes témoins sont les mêmes que les classes de sortie est effectué avec l'objectif d'obtenir une classification sensiblement identique, en particulier de distribution statistique similaire, à celle du modèle cible sur les classes de sortie faisant partie des classes témoins. En d'autres termes, chaque modèle témoin pour lesquels les classes témoins sont les mêmes que les classes de sortie « imite » au mieux le modèle cible pour la tâche de classification commune.

De préférence, les autres modèles témoins sont entraînés pour la classification des R classes témoins choisies par un processus d'apprentissage analogue à celui mis en oeuvre pour les modèles témoins pour lesquels les classes témoins sont les mêmes que les classes de sortie.

Les modèles témoins ainsi générés servent pour l'apprentissage de méthodes de détermination pour déterminer si une classe candidate fait partie des classes oubliées par une méthode de désapprentissage appliquée au modèle initial de classification dont est issu le modèle cible.

Une telle méthode de détermination s'applique pour chaque classe candidate et fournit en sortie une prédiction binaire (classe oubliée ou non) et un score de prédiction associé, le score de prédiction indiquant la fiabilité de la prédiction et permettant de déterminer une probabilité que la classe candidate soit une classe oubliée.

Le processeur 4 comporte en outre :
- un module 32 de première détermination mis en oeuvre pour une ou chaque classe candidate, en fonction de valeurs d'homogénéité calculées dans l'espace latent pour le modèle cible et dans l'espace latent de chaque modèle témoin, fournissant en sortie une première prédiction et un premier score de prédiction associé ; et
- un module 34 de deuxième détermination, mis en oeuvre pour la ou chaque classe candidate, en fonction d'une caractéristique de ré-apprentissage de classes supplémentaires parmi les classes candidates par le modèle cible et par chacun des modèles témoins, fournissant en sortie une deuxième prédiction et un deuxième score de prédiction associé.

Le processeur 4 est configuré pour mettre en oeuvre le module 32 de première détermination et/ou le module 34 de deuxième détermination.

Le processeur 4 comporte en outre un module 36 de calcul d'un score final en fonction du premier score de prédiction et/ou du deuxième score de prédiction.

De préférence, le module 32 de première détermination et le module 34 de deuxième détermination sont mis en oeuvre, car leurs résultats sont complémentaires, et le score final obtenu est plus fiable.

Dans un mode de réalisation, les modules 30, 32, 34, 36 sont réalisés sous forme d'instructions logicielles formant un programme d'ordinateur, qui, lorsqu'il est exécuté par un dispositif électronique programmable, met en oeuvre un procédé d'analyse automatique de désapprentissage d'au moins une classe par un modèle de classification de données selon l'invention.

En variante non représentée, les modules 30, 32, 34, 36 sont réalisés chacun sous forme de composants logiques programmables, tels que des FPGA (de l'anglais *Field Programmable Gate Array*), des microprocesseurs, des composants GPGPU (de l'anglais *General-purpose processing on graphies processing),* ou encore de circuits intégrés dédiés, tels que des ASIC (de l'anglais *Application Spécifie Integrated Circuit).*

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

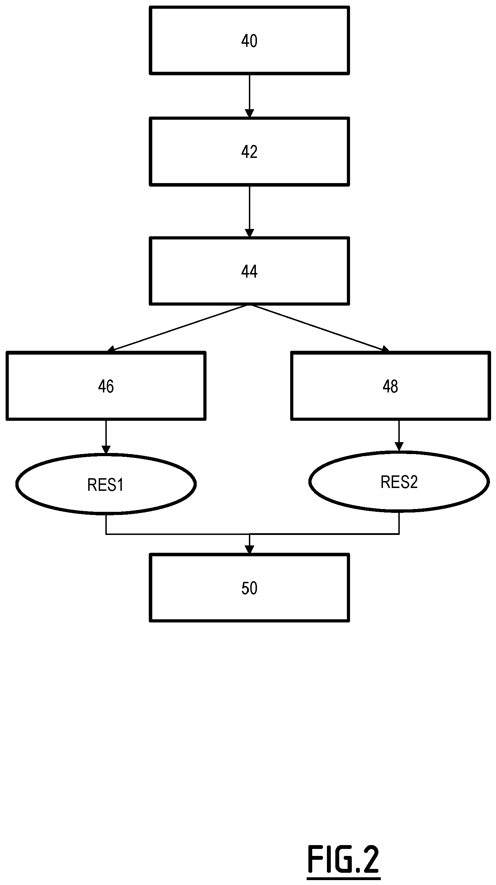

La figure 2 est un synoptique des principales étapes d'un procédé d'analyse automatique de désapprentissage d'au moins une classe selon un mode de réalisation.

Le procédé comporte une étape 40 de récupération d'une part, du modèle cible fourni sous la forme d'un module cible d'extraction de caractéristiques cible et d'un module cible de classification en P classes de sortie, et des instances d'une base de données, comportant des instances des P classes de sortie du modèle cible et des instances de Q classes candidates, distinctes des classes de sortie.

Il est à noter qu'optionnellement, le procédé comprend également une étape d'augmentation du nombre d'instances (non représentée) par exemple par traitement d'images lorsque les données instances sont des images numériques (e.g. rotation, translation, retournement (ou flipping en anglais) vertical ou horizontal). Cela permet notamment d'assurer qu'un nombre suffisant d'instances est disponible pour le calcul de modèles témoins, décrit ci-après.

Le procédé comprend ensuite une étape 42 de partitionnement des instances en une pluralité de partitions, de manière à générer des partitions distinctes pour l'apprentissgae des modèles témoins.

Par exemple, à l'étape 42 sont calculées N partitions distinctes, pour l'apprentissage de N modèles témoins, chaque partition contenant des instances de R classes choisies parmi les classes de sortie CS₁...CS_{P} et les classes candidates CC₁...CC_{Q}.

Les tailles des partitions distinctes peuvent être différentes, selon le nombre Ri de classes pour chaque modèle témoin MTi.

Chaque partition comprend un premier sous-ensemble d'instances destinées à l'apprentissage d'un modèle témoin et un deuxième sous-ensemble d'instances de test ou de validation d'un modèle d'apprentissage.

Le procédé comprend alors un apprentissage 44 de N modèles témoins.

Chaque modèle témoin MTᵢ est entraîné par apprentissage machine pour classifier les instances en Rᵢ classes témoins.

De préférence les Ri classes témoins comprennent des classes parmi les classes de sortie CS₁...CS_{P} et des classes parmi les classes candidates CC₁...CC_{Q}.

Le procédé met en oeuvre, en utilisant le modèle cible, les modèles témoins calculés et les instances reçues en entrée respectivement une étape 46 de première détermination et/ou une étape 48 de deuxième détermination, qui sont décrites en détail ci-après.

De préférence, le procédé met en oeuvre la première détermination 46 et la deuxième détermination 48, ces étapes fournissant chacune un résultat respectif RES1 et RES2, pour chacune des classes candidates.

De préférence, les résultats respectifs sont des prédictions binaires et des scores de prédiction, pour chacune des classes candidates, la prédiction binaire indiquant la prédiction pour la classe candidate de faire partie des classes dites oubliées par le modèle cible.

De préférence, la première détermination 46 est réalisée en fonction de valeurs d'homogénéité calculées pour chaque classe candidate, dans l'espace latent respectif de chaque modèle, pour le modèle cible et pour chaque modèle témoin.

De préférence, la deuxième détermination 48 est réalisée en fonction d'une caractéristique de ré-apprentissage de classes supplémentaires parmi lesdites classes candidates par le modèle cible et les modèles témoins.

Le procédé comprend ensuite une étape 50 de calcul d'un score final par classe candidate. Dans le cas où la première détermination 46 et la deuxième détermination 48 sont mises en oeuvre, l'étape 50 met en oeuvre une agrégation des résultats respectifs.

Par exemple l'agrégation est effectuée par calcul d'une moyenne des premiers et deuxièmes scores.

Dans le cas où l'une ou l'autre des étapes de détermination 46, 48 est mise en oeuvre, l'étape 50 met en oeuvre une simple reprise des scores de probabilité calculés par l'étape de détermination mise en oeuvre.

Le score final calculé permet alors de déterminer, pour chaque classe candidate, si elle fait partie des classes oubliées lors d'un ré-apprentissage du modèle cible à partir d'un modèle initial non fourni.

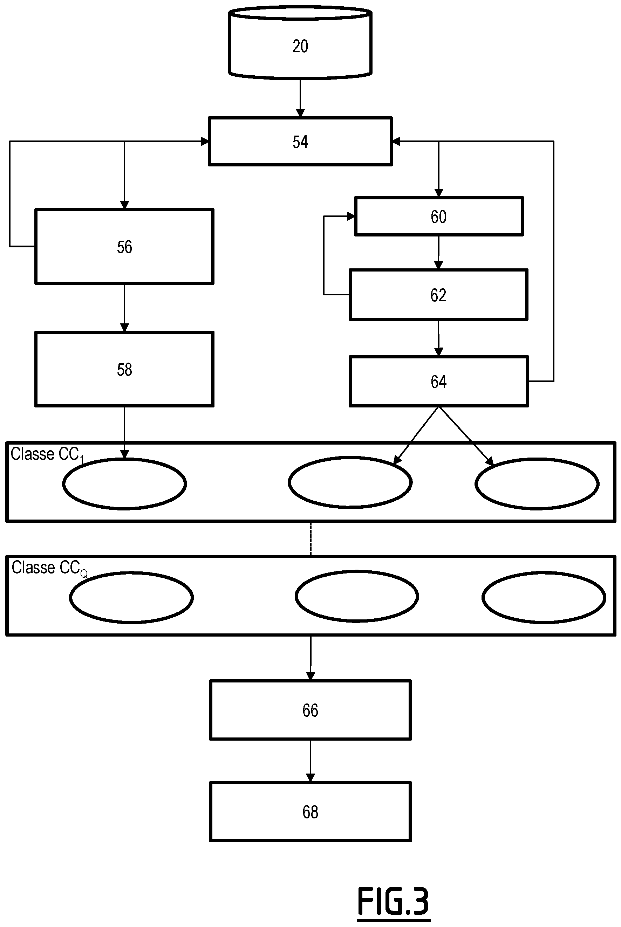

Un mode de réalisation de la première détermination 46 est décrit en référence à la figure 3.

Dans ce mode de réalisation, la première détermination est effectuée par des valeurs d'homogénéité calculées pour chaque classe candidate, d'une part dans l'espace latent du modèle cible, d'autre part dans l'espace latent pour chaque modèle témoin.

Partant des instances 20 des classes candidates, le procédé comprend une étape 54 d'extraction des instances d'une des classes candidate.

Pour la classe candidate CCⱼ traitée, chacune de ses instances Eⱼₖ est fournie en entrée du module cible d'extraction des caractéristiques, qui est exécuté (étape 56) pour obtenir un vecteur de dimension T de caractéristiques V^{c}ⱼₖ dans l'espace latent.

L'étape 56 est répétée pour chacune des classes candidates, et les vecteurs des caractéristiques obtenus sont mémorisés.

Le procédé comporte alors un calcul 58 d'une première valeur d'homogénéité, pour chaque classe candidate, à partir de l'ensemble des vecteurs de caractéristiques obtenus avec le modèle cible, pour toutes les instances des classes candidates CC_{1...} CC_{Q}.

La première valeur d'homogénéité, pour chaque classe candidate, est représentative de l'homogénéité spatiale de l'ensemble de vecteurs de caractéristiques (ou cluster) de la classe candidate dans l'espace latent.

Par exemple, dans un mode de réalisation, le calcul d'une valeur d'homogénéité calculée est un coefficient de Silhouette. De manière connue, le coefficient de Silhouette, pour une instance donnée Eⱼₖ, dépend :
- de la moyenne des distances entre le vecteur de caractéristiques V^{c}ⱼₖ et les vecteurs caractéristiques V^{c}ⱼₘ , m *≠ k* de la même classe candidate CCⱼ traitée , et
- de la distance minimale entre le vecteur de caractéristiques V^{c}ⱼₖ et les vecteurs caractéristiques V^{c}ₕₙ , *h ≠ j ,* n étant un indice variant de 1 au nombre d'instances de la classe candidate CCₕ.

Sensiblement en parallèle ou séquentiellement, le procédé comprend la mise en oeuvre pour chaque modèle témoin, sélectionné à l'étape 60, la mise en oeuvre du module témoin d'extraction des caractéristiques sur chaque instance de la classe candidate (étape 62) pour obtenir des vecteurs de caractéristiques respectifs de dimension T, et l'itération de l'étape 62 pour chaque classe candidate, puis le calcul 64 d'une deuxième valeur d'homogénéité par classe candidate et par modèle témoins, le calcul 64 étant analogue au calcul effectué à l'étape 58.

Ainsi sont obtenues des premières et deuxièmes valeurs d'homogénéité dans l'espace latent pour chaque classe candidate CC₁ ... CC_{Q}, en appliquant le modèle cible et chacun des modèles témoins.

La première détermination comprend alors une étape 66 d'apprentissage d'un algorithme de normalité sur les deuxième valeurs d'homogénéité précédemment calculées sur les modèles témoins.

Par exemple, un algorithme « forêt d'isolement » (de l'anglais « isolation forest ») est mis en oeuvre, qui calcule un score d'anomalie pour chaque observation d'un ensemble de données.

Dans son application dans le procédé décrit ici, connaissant les classes apprises par chaque modèle témoin, l'étape 66 réalise un apprentissage de scores d'anomalie pour chaque classe candidate, en fonction des deuxièmes valeurs d'homogénéité calculées, selon que la classe candidate a été apprise ou non par les modèles témoins.

Il est alors possible de déterminer, à partir d'une valeur d'homogénéité calculée pour une classe candidate dans un espace latent d'un modèle de classification, un score représentatif du fait que la classe candidate a été apprise par le modèle de classification ou non-apprise par le modèle de classification. Le procédé comprend enfin une étape 68 d'application de l'algorithme avec les premières valeurs d'homogénéité obtenues pour chaque classe candidate CCⱼ pour calculer un score d'anomalie associé. Le score d'anomalie par classe est alors transformé en un premier score de prédiction du fait que la classe candidate CCⱼ soit une classe oubliée.

Selon des variantes, l'étape 66 d'apprentissage d'un algorithme de normalité met en oeuvre l'algorithme DBSCAN (pour « Density-Based Spatial Clustering of Applications with Noise » ou l'algorithme LOF (pour « Local Outlier Factor »), connus dans le domaine de l'intelligence artificielle pour la détection d'anomalies non-supervisée.

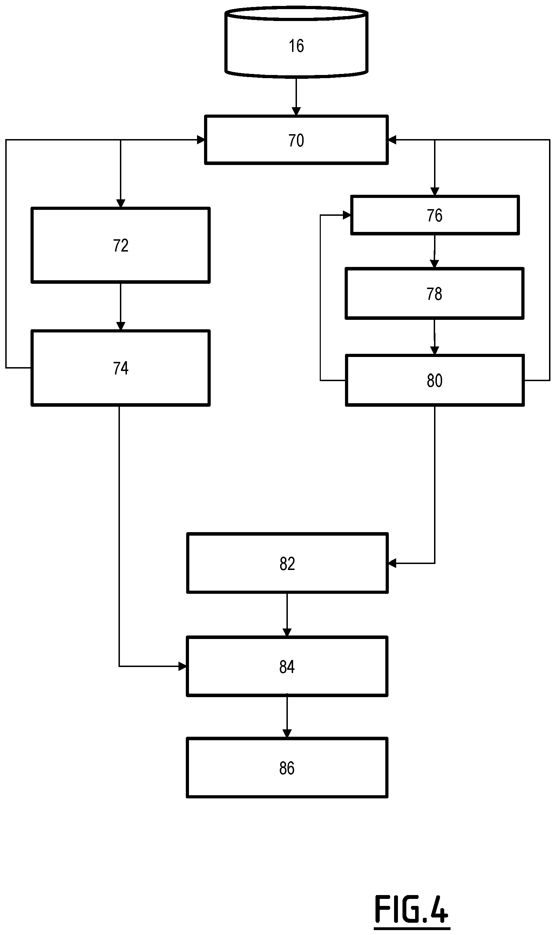

Un mode de réalisation de la deuxième détermination 48 est décrit en référence à la figure 4.

Dans ce mode de réalisation, la deuxième détermination est effectuée en fonction d'une caractéristique de ré-apprentissage de classes supplémentaires parmi lesdites classes candidates par le modèle cible et les modèles témoins.

Partant des instances 16 des classes de sortie du modèle cible et de classes candidates, le procédé comprend, pour des sous-ensembles des instances sélectionnées à l'étape 70 formant un jeu de données d'entraînement, un ré-apprentissage de raffinement (en anglais « fine-tuning »).

Dans un mode de réalisation, le procédé met en oeuvre un ré-apprentissage de raffinement de toutes les classes candidates pour une pluralité de passages complets des jeux de données d'entraînement, chaque passage étant également appelé époque (de l'anglais « epoch »).

Les performances du ré-apprentissage de raffinement sont alors analysées pour chaque classe candidate.

Par exemple une performance d'apprentissage est représentée par une courbe représentant la précision de classification d'instances de la classe candidate en fonction des époques.

Le ré-apprentissage de raffinement est appliqué, à partir du modèle cible à l'étape 72, en utilisant le module cible d'extraction de caractéristiques préalablement entraîné.

Le ré-apprentissage de raffinement modifie alors le module cible de classification pour passer de P classes de sortie à P' classes de sortie, P' étant égal à P augmenté du nombre de classes comprises dans le sous-ensemble d'instances sélectionnées à l'étape 70.

Dans un mode de réalisation, P'=P+Q, ou en d'autres termes, le sous-ensemble d'instances sélectionnées à l'étape 70 comprend des instances pour toutes les Q classes candidates.

Le procédé comprend en outre une évaluation 74 de la vitesse de ré-apprentissage de chaque classe candidate par le modèle cible, appelée première vitesse de ré-apprentissage.

Par exemple, la vitesse de ré-apprentissage est évaluée par la précision d'apprentissage moyenne obtenue par le modèle considéré à chaque époque.

Sensiblement en parallèle ou séquentiellement, le procédé comprend la mise en oeuvre pour chaque modèle témoin, sélectionné à l'étape 76, d'un un ré-apprentissage de raffinement (en anglais « fine-tuning ») à l'étape 78, en utilisant le module témoin d'extraction de caractéristiques préalablement entraîné.

Le ré-apprentissage de raffinement modifie alors le module témoin de classification du modèle témoin considéré pour passer de R classes témoins à R' classes témoins, R' étant égal à R augmenté du nombre de classes comprises dans le sous-ensemble d'instances sélectionnées à l'étape 70.

Dans un mode de réalisation, R'=R+Q, ou en d'autres termes, le sous-ensemble d'instances sélectionnées à l'étape 70 comprend des instances pour toutes les Q classes candidates.

Pour chaque modèle témoin, une évaluation d'une deuxième vitesse de ré-apprentissage, analogue à celle effectuée à l'étape 74 pour le modèle cible, est effectuée à l'étape 80.

Le procédé comprend ensuite une comparaison 82 des deuxièmes vitesses de ré-apprentissage, pour chaque classe candidate, entre les modèles témoins, en connaissance de l'ensemble des classes témoins de chaque modèle témoin.

En particulier, il est constaté que la vitesse de ré-apprentissage est supérieure dans la phase de ré-apprentissage de raffinement lorsque la classe candidate considérée fait partie des classes témoins, i.e. a été apprise lors de l'apprentissage du modèle témoin considéré par rapport à la vitesse d'apprentissage dans la phase de ré-apprentissage de raffinement lorsque la classe candidate considérée ne fait pas partie des classes témoins du modèle témoin considéré.

Par exemple, on considère les valeurs suivantes représentatives de la vitesse de ré-apprentissage :
- l'indice d'époque à partir de laquelle la précision de classification atteint un plateau, i.e. la pente de la courbe de précision de classification est horizontale avec une marge de de 2 à 3%, et/ou
- une valeur de précision maximale atteinte après un nombre donné d'époques, et/ou
- une valeur minimale d'une fonction de perte minimisée lors de l'apprentissage, par exemple la fonction d'entropie croisée (« cross-entropy » en anglais).

Bien entendu, d'autres valeurs représentatives de la vitesse de ré-apprentissage à la portée de l'homme du métier sont applicables.

Le procédé comprend alors une étape 84 de calcul, pour chaque classe candidate, d'une ou plusieurs valeurs représentatives de la première vitesse de ré-apprentissage du modèle cible, par exemple parmi les valeurs listées ci-dessus.

Le procédé comprend ensuite une étape 86 de comparaison, pour chaque classe candidate, de la ou des valeurs représentatives de la première vitesse de réapprentissage, du modèle, aux valeurs représentatives de la deuxième vitesse de réapprentissage selon que la classe candidate appartenait ou non aux classes apprises par les modèles témoins.

En fonction d'un résultat de la comparaison, le procédé comprend, pour chaque classe candidate, une détermination de la deuxième prédiction binaire (classe oubliée ou non) et d'un deuxième score de prédiction associé. Par exemple, si, pour une classe candidate, la ou chaque valeur représentative de la première vitesse de ré-apprentissage est plus proche d'une valeur représentative de la deuxième vitesse de ré-apprentissage correspondant aux modèles témoins ayant initialement appris la classe candidate, la deuxième prédiction binaire prédit que la classe candidate est une classe oubliée.

Avantageusement, le procédé proposé permet de vérifier le désapprentissage de classes, et par conséquent constitué une étape intermédiaire importante dans la mise au point d'un modèle de classification sécurisé. En effet, les méthodes de désapprentissage ont été mises au point pour éviter un ré-entraînement complet, consommateur de ressources calculatoires et énergétiques, d'un modèle de classification dans des cas pratiques où des classes initialement apprises sont considérées sensibles. En particulier, cela s'applique pour la classification de données industrielles, relatives à des processus industriels mis en oeuvre par un propriétaire légitime. Il est alors critique d'être en mesure de vérifier le désapprentissage avant de distribuer le modèle de classification, afin de s'assurer que le modèle de classification ne révèle pas d'information relative aux données ou classes désapprises. Lorsque le procédé d'analyse automatique de désapprentissage proposé relève un score final indiquant une probabilité qu'une classe candidate soit une classe oubliée supérieur à un seuil prédéterminé, il convient d'appliquer une correction du modèle cible de classification de données.

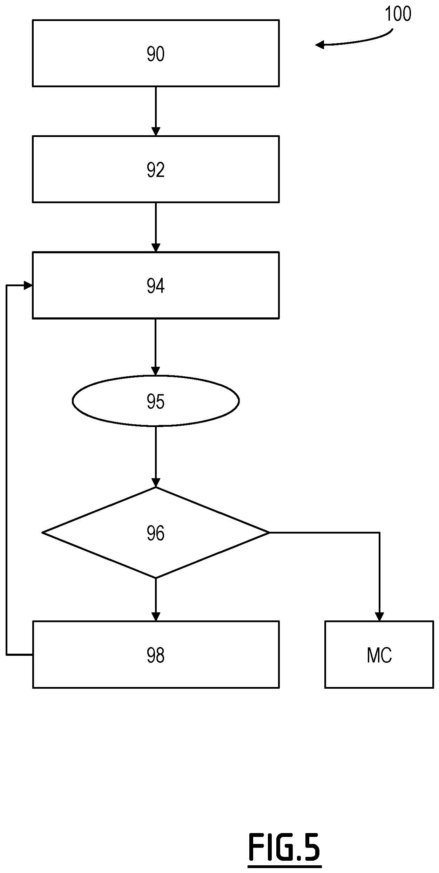

La figure 5 est un synoptique des principales étapes d'un procédé 100 de génération d'un modèle de classification de données par apprentissage machine sécurisé, garantissant le désapprentissage d'une ou plusieurs classes initialement apprises pour la classification.

Le procédé 100 de génération d'un modèle de classification de données MC par apprentissage machine sécurisé est mis en oeuvre par un processeur de calcul d'un dispositif électronique programmable.

Par exemple, le procédé est mis en oeuvre sous forme de briques logicielles exécutables, formant un programme d'ordinateur.

Le procédé 100 comprend une étape 90 d'apprentissage d'un modèle de classification MC sur un ensemble de données d'apprentissage, selon toute méthode d'apprentissage machine connue choisie.

Le procédé 100 comprend ensuite une étape 92 de désapprentissage, par une méthode de désapprentissage choisie, d'une classe CA.

Le mode de réalisation est décrit pour une classe CA, mais s'applique de manière analogue pour le désapprentissage d'une pluralité de classes initialement apprises.

Le procédé 100 comporte alors une mise en oeuvre 94 du procédé d'analyse automatique de désapprentissage d'au moins une classe pour la classe candidate CA relativement au modèle de classification MC, et un score final 95 permettant de déterminer une probabilité associée que la classe candidate CA soit une classe oubliée.

Une vérification 96 de condition de sécurité, fonction du score final et/ou de la probabilité que la classe candidate soit une classe oubliée, est mise en oeuvre ensuite. Par exemple, cette vérification consiste à déterminer si la probabilité que la classe candidate CA soit une classe oublié est inférieure à un seuil prédéterminé.

Si la condition de sécurité est vérifiée, le procédé prend fin, le modèle de classification MC est considéré sécurisé.

Si la condition de sécurité n'est pas vérifiée, en d'autres termes que la vérification indique une sécurité insuffisante, alors le procédé comprend en outre une étape 98 de modification du modèle de classification MC, par exemple par mise en oeuvre d'une autre méthode de désapprentissage de la classe CA parmi les méthodes de désapprentissage connues, voir notamment l'article : « Towards Unbounded Machine Unlearning » de M. Kurmanji et al, publié en 2023, https://arxiv.org/abs/2302.09880. Cette autre (ou deuxième) méthode d'apprentissage peut différer de la première méthode d'apprentissage mise en oeuvre à l'étape 92 par ses paramètres ou être une méthode totalement différente de la première méthode de désapprentissage.

Les étapes 94 à 98 sont de préférence itérées jusqu'à ce qu'un modèle de classification sécurisé soit obtenu.

Selon une variante, l'étape 94 est mise en oeuvre pour une pluralité de classes candidates à l'oubli, et les scores finaux obtenus sont comparés entre eux, ce qui permet de déterminer si le désapprentissage de la classe candidate CA est efficace relativement à d'autres classes candidates.

Ainsi, avantageusement, l'invention permet d'améliorer la sécurité de modèles de classification par apprentissage machine relativement à la révélation, à partir du modèle, de classes désapprises.

## Revendications

1. Procédé d'analyse automatique de désapprentissage d'au moins une classe par un modèle de classification de données, dit modèle cible, le modèle cible ayant été préalablement entraîné par apprentissage machine pour une classification de données en P classes de sortie,
le procédé recevant en entrée le modèle cible sous forme d'un module cible d'extraction de caractéristiques représentées dans un espace latent, et d'un module cible de classification des caractéristiques en P classes de sortie, et une base de données comportant des instances de chacune des P classes de sortie et des instances de Q classes candidates distinctes des P classes de sortie,
le modèle cible ayant été obtenu à partir d'un modèle initial de classification des données en des classes initiales, par désapprentissage d'au moins une classe dite classe oubliée, parmi desdites classes initiales, le modèle initial de classification étant non fourni,
le procédé étant mis en oeuvre par un processeur de calcul et comportant, pour déterminer si au moins une desdites classes candidates est une desdites classes oubliée, des étapes de :
- calcul (44) par apprentissage machine d'une pluralité de modèles témoins, chaque modèle témoin comportant un module témoin d'extraction de caractéristiques représentées dans un espace latent, et un module témoin de classification pour classifier des données d'entrées en un nombre de classes témoins choisi, à partir d'instances d'au moins un premier sous-ensemble des classes de sortie et/ou d'au moins un deuxième sous-ensemble des classes candidates,
pour la ou chaque classe candidate :
- première détermination (46), en fonction de valeurs d'homogénéité calculées dans l'espace latent pour le modèle cible et pour chaque modèle témoin, fournissant en sortie une première prédiction binaire et un premier score de prédiction associé, et
- deuxième détermination (48), en fonction d'une caractéristique de ré-apprentissage de raffinement de classes supplémentaires parmi lesdites classes candidates par le modèle cible et les modèles témoins, fournissant en sortie une deuxième prédiction binaire et un deuxième score de prédiction associé ;
- calcul (50) d'un score final en fonction du premier score de prédiction et du deuxième score de prédiction, le score final permettant de déterminer une probabilité que la classe candidate soit une classe oubliée.

2. Procédé selon la revendication 1, dans lequel la première détermination comporte, pour chaque classe candidate, pour une pluralité d'instances des classes candidates :
- mise en oeuvre du module cible d'extraction des caractéristiques du modèle cible pour obtenir un vecteur de caractéristiques dans l'espace latent pour chaque instance de chaque classe candidate,
- Pour chaque classe candidate, calcul d'une première valeur d'homogénéité en fonction des vecteurs de caractéristiques calculés.

3. Procédé selon la revendication 2, dans lequel la première détermination comporte en outre, pour chaque classe candidate et chaque modèle témoin, une mise en oeuvre du module témoin d'extraction des caractéristiques dudit modèle témoin pour obtenir un vecteur de caractéristiques dans l'espace latent associé, et un calcul d'une deuxième valeur d'homogénéité par classe candidate et par modèle témoin.

4. Procédé selon la revendication 3, comportant en outre un apprentissage d'un algorithme de normalité sur les deuxièmes valeurs d'homogénéité calculées pour les classes candidates pour tous les modèles témoins.

5. Procédé selon la revendication 4, comportant une mise en oeuvre de l'algorithme de normalité sur les première valeurs d'homogénéité calculées avec le modèle cible par classe candidate pour obtenir la première prédiction binaire et le premier score de prédiction classe candidate.

6. Procédé selon l'une quelconque des revendications 1 à 4, dans lequel la deuxième détermination met en oeuvre, pour ledit modèle cible et chacun des modèles témoins, un ré-apprentissage de raffinement d'au moins une classe candidate.

7. Procédé selon la revendication 6, comportant une évaluation par classe candidate, d'une première vitesse de ré-apprentissage de raffinement par le modèle cible, et de deuxièmes vitesses de ré-apprentissage de raffinement par les modèles témoins.

8. Programme d'ordinateur comportant des instructions logicielles qui, lorsqu'elles sont exécutées par un dispositif électronique programmable, mettent en oeuvre un procédé d'analyse automatique de désapprentissage d'au moins une classe conforme aux revendications 1 à 7.

9. Procédé de génération d'un modèle de classification de données par apprentissage machine sécurisé vis-à-vis du désapprentissage d'une ou plusieurs classes initialement apprises pour la classification, comportant les étapes suivantes mises en oeuvre par un processeur de calcul :
a)- génération d'un modèle de classification de données MC par apprentissage machine sécurisé,
b) -désapprentissage (92) d'au moins une classe choisie,
c1)- mise en oeuvre (94) du procédé d'analyse automatique de désapprentissage d'au moins une classe conforme aux revendications 1 à 7, relativement audit modèle de classification de données MC pour ladite au moins une classe choisie comme classe candidate, et obtention, pour chaque classe candidate, d'un score final permettant de déterminer une probabilité associée que la classe candidate soit une classe oubliée ;
c2)- vérification (96) d'une condition de sécurité fonction du score final et/ou de la probabilité associée,
c3)-si la vérification (96) indique une sécurité insuffisante, modification (98) du modèle de classification MC.

10. Procédé selon la revendication 9, dans lequel l'étape de désapprentissage (92) met en oeuvre une première méthode de désapprentissage, et dans lequel ladite modification (98) du modèle de classification MC met en oeuvre une deuxième méthode de désapprentissage de la ou de chaque classe choisie, la deuxième méthode de désapprentissage étant distincte de la première méthode de désapprentissage.

11. Procédé selon la revendication 9 ou 10, dans lequel les étapes c1) à c3) sont itérées jusqu'à ce que la vérification (96) indique une sécurité suffisante.

12. Dispositif d'analyse automatique de désapprentissage d'au moins une classe par un modèle de classification de données, dit modèle cible, le modèle cible ayant été préalablement entraîné par apprentissage machine pour une classification de données en P classes de sortie,
le dispositif recevant en entrée le modèle cible sous forme d'un module cible d'extraction de caractéristiques représentées dans un espace latent, et d'un module cible de classification des caractéristiques en P classes de sortie, et une base de données comportant des instances de chacune des P classes de sortie et des instances de Q classes candidates distinctes des P classes de sortie,
le modèle cible ayant été obtenu à partir d'un modèle initial de classification des données en des classes initiales, par désapprentissage d'au moins une classe dite classe oubliée, parmi desdites classes initiales, le modèle initial de classification étant non fourni,
le dispositif comportant processeur de calcul configuré pour mettre en oeuvre, pour déterminer si au moins une desdites classes candidates est une desdites classes oubliée :
- un module de calcul (30) par apprentissage machine d'une pluralité de modèles témoins (22₁,...,22_{N}), chaque modèle témoin comportant un module témoin d'extraction de caractéristiques (24₁,...,24_{N}) représentées dans un espace latent (12₁,...12_{N}), et un module témoin de classification (26₁,...,26_{N}) pour classifier des données d'entrées en un nombre de classes témoins choisi, à partir d'instances d'au moins un premier sous-ensemble des classes de sortie et/ou d'au moins un deuxième sous-ensemble des classes candidates,
pour la ou chaque classe candidate :
- un module de première détermination (32), en fonction de valeurs d'homogénéité calculées dans l'espace latent pour le modèle cible et pour chaque modèle témoin, fournissant en sortie une première prédiction binaire et un premier score de prédiction associé, et
- un module de deuxième détermination (34), en fonction d'une caractéristique de ré-apprentissage de raffinement de classes supplémentaires parmi lesdites classes candidates par le modèle cible et les modèles témoins, fournissant en sortie une deuxième prédiction binaire et un deuxième score de prédiction associé ;
- un module de calcul (36) d'un score final en fonction du premier score de prédiction et du deuxième score de prédiction, le score final permettant de déterminer une probabilité que la classe candidate soit une classe oubliée.

13. Dispositif de génération d'un modèle de classification de données par apprentissage machine sécurisé vis-à-vis du désapprentissage d'une ou plusieurs classes initialement apprises pour la classification, comportant un processeur de calcul configuré pour exécuter un procédé de génération d'un modèle de classification de données par apprentissage machine sécurisé vis-à-vis du désapprentissage d'une ou plusieurs classes initialement apprises pour la classification conforme aux revendications 9 à 11.
